## Europäisches Patentamt

## European Patent Office

## Office européen des brevets

(11) Veröffentlichungsnummer: **0 175 642 B1**

(12) **EUROPÄISCHE PATENTSCHRIFT**

(45) Veröffentlichungstag der Patentschrift: **10.10.90**

(21) Anmeldenummer: **85810386.4**

(22) Anmeldetag: **26.08.85**

(51) Int. Cl.⁵: **B 29 C 43/08,** B 29 C 31/00, B 29 C 67/18, B 29 C 43/34 // B29L23:20

(54) **Verfahren und Vorrichtung zum Herstellen eines Formkörpers aus Kunststoffmaterial.**

(30) Priorität: **18.09.84 CH 4464/84**

(43) Veröffentlichungstag der Anmeldung:
**26.03.86 Patentblatt 86/13**

(45) Bekanntmachung des Hinweises auf die Patenterteilung:
**10.10.90 Patentblatt 90/41**

(84) Benannte Vertragsstaaten:
**AT CH DE FR GB IT LI SE**

(56) Entgegenhaltungen:
**DE-A-1 915 388**  **GB-A-2 053 077**
**DE-A-2 953 570**  **US-A-2 532 844**
**DE-B-1 184 937**  **US-A-2 890 482**
**FR-A-1 185 069**  **US-A-3 078 517**
**FR-A-1 241 073**  **US-A-3 256 378**
**FR-A-1 251 922**  **US-A-3 999 915**
**FR-A-1 430 899**  **US-A-4 314 799**
**FR-A-2 531 680**

(73) Patentinhaber: **H. Obrist & Co. AG**
**Römerstrasse 50**
**CH-4153 Reinach (CH)**

(72) Erfinder: **Lindenberger, Werner**
**Baselweg 91**
**CH-4147 Aesch (CH)**

(74) Vertreter: **Wenger, René et al**
**Hepp & Partner AG Marktgasse 18**
**CH-9500 Wil (CH)**

Courier Press, Leamington Spa, England.

EP 0 175 642 B1

## Beschreibung

Die Erfindung bezieht sich auf ein Verfahren zum Herstellen eines Formkörpers aus Kunststoffmaterial gemäss dem Oberbegriff von Anspruch 1 sowie auf eine Vorrichtung zur Durchführung des Verfahrens gemäss dem Oberbegriff von Anspruch 7. Derartige Verfahren bzw. Vorrichtungen werden insbesondere zur Herstellung von Kunststofftuben eingesetzt. Dabei wird das Schulterstück der Tuben durch Pressformen hergestellt und in der Regel im gleichen Arbeitsgang mit dem rohrförmigen Teil der Tube verbunden.

Ein derartiges Verfahren mit der dazugehörigen Vorrichtung ist beispielsweise durch die DE-A-30 23 415 bekannt geworden. Dabei wird die plastifizierte Kunststoffmasse in der Form eines ringförmigen Rohlings von oben in die offene Matrize eingebracht. Die Einfüllstation ist dabei fest über dem Drehkörper mit den taktweise vorbeiwandernden Matrizen angeordnet. Bei der Füllstation ist der Stempel mit dem Dorn zur Freigabe der Matrize herausgeschwenkt, so dass Stempel und Dorn etwa in einem Winkel von 90° zur Matrizenachse, bzw. etwa parallel zur Ebene des Drehkörpers liegen. In dieser Position werden auch die rohrförmigen Hohlkörper auf den Dorn aufgeschoben, welche aus fabrikationstechnischen Gründen dem Drehkörper in horizontaler Lage zugeführt werden müssen. Zum Schliessen der Pressform werden Stempel und Dorn mit Hilfe einer Steuervorrichtung wieder zurückgeschwenkt, so dass sie gleichachsig mit der Matrize verlaufen. Anschliessend werden Stempel und Dorn nach unten gegen die Matrize gepresst.

Ein Nachteil dieser Vorrichtung besteht darin, dass das Wegschwenken der Stempel aus der eigentlichen Pressachse eine grosse Zahl mechanisch beweglicher Teile bedingt. Es treten ausserdem Führungs- und Lagerprobleme auf, da es schwierig ist, mit den ausschwenkbaren Stempeln eine absolute Gleichachsigkeit mit den Matrizen zu erreichen. Schliesslich sind Stempel und Dorn nur einseitig an einer galgenartigen Vorrichtung geführt und gelagert, so dass bei hohen Schliessdrücken ein Verkanten des Stempels in der Matrize eintreten kann. Ein weiterer Nachteil dieses bekannten Verfahrens besteht darin, dass der Schliessdruck an einer Arbeitsstation mit einem Kniehebel aufgebracht wird. Matrize und Stempel bleiben dann während der Press- und Abkühlphase mechanisch verklinkt, ohne dass z.B. der Pressdruck nachgeregelt werden könnte. Dies kann möglicherweise zu einem ungenügenden Schliessdruck und damit zu einer ungenügenden Verpressung des Formkörpers führen.

Aus der FR-A-1 241 073 sind ein Verfahren und eine Vorrichtung zum Herstellen von Tuben bekannt geworden, wobei eine vorgeformte Tubenschulter mit dem rohrförmigen Tubenkörper verschweisst wird. Der Vorgang findet in verschiedenen Arbeitsschritten auf einem Drehkörper statt. Das Laden der Dorne erfolgt dabei ebenfalls in vertikaler Lage. Die Dorne müssen zum Laden jedoch in die rohrförmigen Körper eingefahren werden und der Pressdruck setzt von unten nach oben ein, da die vorgeformten Tubenschultern am oberen Ende des Dornes aufliegen. Diese Anordnung ist daher für ein Pressformverfahren ungeeignet, bei dem der Pressdruck von oben nach unten in die mit plastifizierter Kunststoffmasse gefüllte Matrize erfolgen muss.

Durch die US-A-3 591 896 ist ein Pressformverfahren bekannt geworden, bei dem Dorne, Stempel und Matrizen gleichachsig angeordnet sind, und bei dem rohrförmige Körper auf die Dorne aufgeschoben werden. Die Achse des Drehkörpers und damit der rohrförmigen Körper verläuft jedoch horizontal und der Mechanismus zum Oeffnen und Schliessen des Werkzeugs ist kompliziert. Entsprechend aufwendig ist auch die Zufuhr der Kunststoffmasse, die auf ein vertikales Förderband aufgetragen und von dort ausgestanzt und in das Ende des rohrförmigen Körpers gepresst wird.

Es ist daher eine Aufgabe der Erfindung, ein Verfahren und eine Vorrichtung der eingangs genannten Art zu schaffen, mit denen auf einfachste Art ein Füllen der Matrizen möglich ist, ohne dass die Stempel aus ihrer vertikalen Bewegungsachse ausgeschwenkt werden müssen. Die Vorrichtung soll ausserdem eine äusserst präzise Stempelführung erlauben und eine geringe Störanfälligkeit aufweisen. Insbesondere soll auch der Lade- und Entladevorgang vereinfacht werden, da diese Vorgänge die Taktzeiten wesentlich mitbeeinflussen. Diese Aufgabe wird in verfahrensmässiger Hinsicht mit einem Verfahren mit den Merkmalen von Anspruch 1 und in vorrichtungsmässiger Hinsicht mit einer Vorrichtung mit den Merkmalen von Anspruch 7 gelöst.

Das Laden der Dorne in vertikaler Lage macht ein Verschwenken der Dorne überflüssig. Stempel und Dorne müssen dadurch nur noch in der Pressachse verschiebbar gelagert sein, was eine wesentlich präzisere und stabilere Lagerung und Führung ermöglicht. Durch das Aufschieben der rohrförmigen Körper auf die Dorne in der Ladeposition werden zwei Vorteile erzielt. Einerseits muss der Dorn dadurch an der Ladestation zur Aufnahme des rohrförmigen Körpers noch nicht bewegt werden, was die Vorrichtung wesentlich vereinfacht. Anderseits ist bei ganz aufgeschobenem Dorn in der Ladeposition der Bereich über der Matrize wiederum frei, so dass die Matrize mit Kunststoffmaterial gefüllt werden kann.

Eine besonders intensive Verbindung zwischen rohrförmigem Körper und Formkörper findet statt, wenn wenigstens der mit dem Formkörper zu verbindende Bereich des auf den Dorn aufgeschobenen rohrförmigen Körpers und/oder der Formkörper-Rohling in der Matrize vor dem Einpressen in die Matrize vorgewärmt wird. Auf diese Weise findet eine intensive Verschmelzung des Formkörpers bzw. der Tubenschulter mit dem rohrförmigen Körper statt. Es wird verhindert, dass sich eine Grenzschicht bildet, welche im Extremfall ein Ablösen des Formkörpers vom rohrförmigen Körper bewirken könnte. Da die Achse des Dorns nicht verschwenkt werden muss, lässt sich relativ einfach eine Heizvorrichtung anordnen.

Eine besonders einfache Zufuhr der in horizontaler Lage an den Drehkörper herangeführten rohrförmigen Körper ergibt sich, wenn diese mittels einer drehbaren, kegelförmigen Saugtrommel unter den Dorn gebracht werden und mit einem Stössel von der Oberfläche der Saugtrommel auf den Dorn gestossen werden. Das Drehen der rohrförmigen Körper erfolgt somit nicht auf dem Drehkörper selbst, sondern ausserhalb mit einer relativ zum Drehkörper stationären Vorrichtung. Die Saugtrommel ermöglicht ein einfaches und schonendes Ergreifen bzw. Abgeben der rohrförmigen Körper. Der Stössel kann ebenfalls stationär angeordnet sein, so dass eine Steuerung relativ problemlos ist.

Auf ähnlich einfache Weise erfolgt das Entladen, wenn die mit dem Formkörper verbundenen rohrförmigen Körper nach dem Pressvorgang vom Dorn auf die Oberfläche einer drehbaren, kegelförmigen Saugtrommel transferiert werden. Die Saugtrommel verschwenkt die Körper wiederum in eine horizontale Lage, was zum automatischen Abtransport auf einem Transportband vorteilhaft und zweckmässig ist.

Wenn der Dorn und/oder die Matrize zum Laden und Entladen derart verschoben werden, dass ein Zwischenraum entsteht, der wenigstens der Gesamtlänge des rohrförmigen Körpers entspricht, kann die Saugtrommel unmittelbar im Drehbereich des Drehkörpers zwischen der Matrize und dem Dorn angeordnet werden.

Eine weitere Vereinfachung beim Schliessen des Werkzeugs und beim Pressen ergibt sich, wenn die Hubbewegung der Dorne und/oder Matrizen im Verlauf einer Umdrehung des Drehkörpers mechanisch über eine Steuerkurve ausgeführt wird und wenn das Pressen des Formkörpers mit einem Druckmittelzylinder erfolgt. Dies ermöglicht den Einsatz eines relativ einfachen Hydraulikzylinders, da die geringen Kräfte zum Absenken und Anheben des Dorns bzw. des Stempels über die Steuerkurve übertragen werden. Der Hydraulikkolben muss somit nur noch für einen relativ geringen Hub ausgelegt sein. Die Steuerkurve hat ausserdem den Vorteil, dass bei einem Defekt in der Hydraulik der Dorn in jedem Fall angehoben wird, so dass eine Kollision mit den fest über den Matrizen angeordneten Vorrichtungen wie z.B. Saugtrommeln oder Extruder zum Füllen der Matrizen vermieden wird.

Eine besonders vorteilhafte Füllung der Matrize ergibt sich, wenn diese zur Aufnahme des Kunststoffrohlings an der Füllstation gegen die Austrittsöffnung für das Kunststoffmaterial gefahren wird. Auf diese Weise kann der Kunststoffrohling unmittelbar an der Austrittsöffnung abgenommen werden und muss nicht im freien Fall in die Matrize eingeworfen werden. Das Abwerfen im freien Fall birgt die Gefahr in sich, dass der in der Regel ringförmig austretende Kunststoffrohling schräg in die Matrize fällt, wenn beispielsweise der Kunststoffrohling nicht sauber von der Austrittsöffnung abgetrennt wird. Der Füllvorgang kann ausserdem noch dadurch optimiert werden, dass der in der Matrize liegende und vom Materialstrom getrennte Kunststoffrohling durch Wärmeeinwirkung von der geschlossenen Austrittsöffnung abgelöst wird. Mittels dieser Wärmeeinwirkung wird der Kunststoffrohling von der Austrittsöffnung abgeschmolzen. Es können sich keine zähflüssigen Materialfäden bilden, welche den Rohling noch mit der Austrittsöffnung verbinden. Ausserdem wird durch die Wärmeeinwirkung verhindert, dass der Kunststoffrohling an der Oberfläche zu stark abkühlt, so dass sich schon vor der Deformation eine relativ starre Oberflächenschicht bilden kann.

Die Vorteile der erfindungsgemässen Vorrichtung liegen insbesondere darin, dass die Lagerung, Führung und Steuerung der Dorne bzw. der Stempel optimiert werden kann. Die beweglichen Teile können auf das erforderliche Minimum reduziert werden, und es müssen gesamthaft nur geringe Massen beschleunigt bzw. verzögert werden.

Wenn auf dem Drehkörper über jeder Matrize eine Pressvorrichtung angeordnet ist, kann die Hubbewegung bzw. der Schliessdruck unabhängig von der Relativlage des Drehkörpers auch während der Drehbewegung verändert werden. Ausserdem erlaubt diese Anordnung ein Konstanthalten des Schliessdruckes während einer bestimmten Zeitspanne.

Eine besonders einfache Steuerung der Hubbewegung kann erreicht werden, wenn auf der Drehachse des Drehkörpers eine feststehende zylindrische Trommel gleichachsig angeordnet ist und wenn die Stempel bzw. die Dorne und/oder die Matrizen zum Ausführen einer Hubbewegung mit einer Steuerkurve auf dem Mantel der Trommel im Eingriff sind. Ersichtlicherweise wird dadurch eine Zwangsführung erreicht, so dass die Dorne und die Matrizen in einem bestimmten Bereich des Drehkörpers immer auseinandergefahren sind. Dies ist vor allem aus Sicherheitsgründen vorteilhaft, um eine Kollision der Dorne oder der Matrizen mit fest im Drehbereich des Drehkörpers angeordneten Vorrichtungen zu verhindern. Das gleichzeitige Auseinanderfahren von Dorn und Matrize hat ausserdem noch den Vorteil, dass die Steuerkurven auf der feststehenden zylindrischen Trommel nicht zu steil verlaufen müssen, wodurch unerwünschte Querkräfte an der Steuerkurve reduziert werden können.

Besonders einfach kann der aus der Austrittsöffnung austretende Kunststoffrohling in die Matrizen überführt werden, wenn diese an der Steuerkurve zum Laden der Dorne gegen die Kraft einer Feder absenkbar sind, und wenn die Steuerkurve im Bereich der Ladestation derart steil verläuft, dass die Matrizen durch die Federkraft in annähernd senkrechter Hubbewegung gegen die Austrittsöffnung für das Kunststoffmaterial bewegt werden. Mittels dieser steilen Hubbewegung kann der Kunststoffrohling in den Formhohlraum der Matrize abgelegt werden. Der Anstiegswinkel kann dabei so gewählt werden, dass beim Erreichen des obersten Punktes der Matrize an der Füllstation der Kunststoffrohling mit seiner Unterseite den Formhohlraum unmittelbar berührt.

Ein Ausführungsbeispiel der Erfindung wird in den Zeichnungen dargestellt und nachstehend genauer beschrieben. Es zeigen:

Figur 1 eine Draufsicht auf eine erfindungsgemässe Vorrichtung mit den verschiedenen Stationen am Drehkörper,

Figur 2 einen Querschnitt durch eine Ladestation vor dem Aufschieben eines rohrförmigen Körpers auf den Dorn,

Figur 3 einen Querschnitt durch eine Füllstation vor dem Hochfahren der Matrize,

Figur 4 die Füllstation gemäss Figur 3 mit hochgefahrener Matrize zur Abnahme des Kunststoffrohlings,

Figur 5 einen Querschnitt durch eine Entladestation mit vom Dorn abgezogenem Tubenkörper,

Figur 6 ein Diagramm mit dem Hub der Arbeitswerkzeuge an den einzelnen Arbeitsstationen.

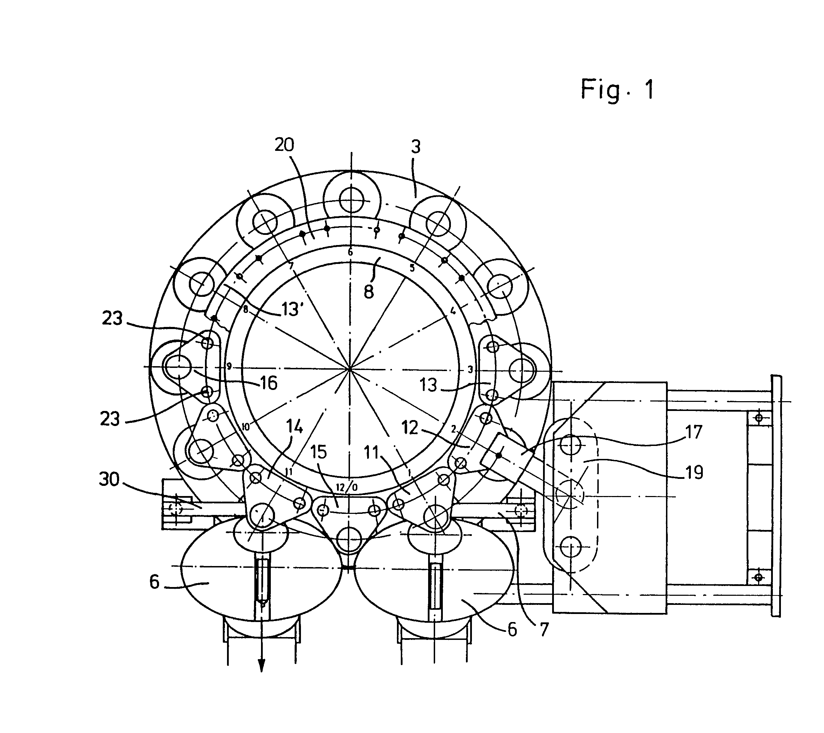

Wie insbesondere aus den Figuren 1 bis 3 ersichtlich ist, besteht die Vorrichtung aus einem drehantreibbaren Drehkörper 3, der beispielsweise auf einem Maschinenständer gelagert ist. Der Drehkörper 3 ist auf geeignete Weise mit einer hier nicht näher dargestellten Antriebsvorrichtung verbunden. Auf dem Drehkörper 3 sind im Umfangsbereich in regelmässiger Winkelteilung Matrizen 1 angeordnet. Die Matrizen 1 definieren die Aussenkonfiguration des Formkörpers, im vorliegenden Fall der Tubenschulter mit dem Aussengewinde am Tubenhals.

Ueber jeder Matrize ist ein Stempel 2 angeordnet, welcher die Innenkonfiguration der Tubenschulter ergibt. Der Stempel 2 ist am unteren Ende eines Dornes 4 angeordnet, und kann zum Laden des Dornes ins Innere des Dornes zurückgezogen werden. Dadurch kann der rohrförmige Körper 5 besser unter den Dorn 4 gebracht werden, da dieser um die Höhe des Stempels 2 weniger hochgefahren werden muss. Sowohl der Dorn 4 mit dem Stempel 2 als auch die Matrize 1 können parallel zur Mittelachse des Drehkörpers 3 in der Pressachse auf und nieder bewegt werden. Die Führung der Werkzeugteile erfolgt dabei über eine Führungsvorrichtung 24 an einem Paar vertikaler Führungsstangen 23.

Die Führungsstangen 23 sind auf dem Drehkörper 3 befestigt und werden im oberen Bereich von einer Kreisringscheibe 20 gehalten. Dies ergibt ersichtlicherweise eine präzise und stabile Führung der beweglichen Werkzeugteile. Die Presskraft zum Schliessen des Formwerkzeuges wird über einen Druckmittelzylinder 25 aufgebracht, welcher in der Pressachse über dem Dorn 4 angeordnet ist. Es kann sich dabei um einen Hydraulik- oder um einen Pneumatikzylinder üblicher Bauart handeln.

Gleichachsig zum Drehkörper 3 ist eine Trommel 8 fest angeordnet. Die Trommel 8 ist umlaufend mit einer Führungsnut 9 bzw. 9' versehen, in welche die Führungsvorrichtung 24 bzw. die Matrizenhalterung 29 mittels Führungsrollen 10, 10' eingreifen. Beim Drehen des Drehkörpers 3 um die feste Trommel 8 folgen ersichtlicherweise die Führungsrollen 10 und 10' dem Verlauf der Führungsnuten 9 und 9', so dass bei einem Ansteigen oder Abfallen dieser Nuten die Führungsvorrichtung 24 oder die Matrizenhalterung 29 entlang den Führungsstangen verschoben werden. Auf diese Weise führen die Dorne 4 mit den Stempeln 2 und die Matrizen eine Hubbewegung zum Oeffnen und Schliessen des Werkzeuges sowie zum Laden und Entladen der Dorne aus. Die eigentliche Presskraft wird jedoch über den Druckmittelzylinder 25 aufgebracht.

Die Matrizenhalterungen 29 werden beim Oeffnen des Werkzeuges gegen die Kraft einer Spannfeder 31 nach unten gepresst. Diese Federkraft wird beim Schliessen des Werkzeuges benötigt, um die Matrize an der Ladestation rasch nach oben zu bewegen, wie anschliessend noch beschrieben sein wird.

Im Drehbereich des Drehkörpers 3 über den Matrizen 1 ist eine Saugtrommel 6 angeordnet. Die Saugtrommel 6 ist kegelförmig ausgebildet und weist auf dem Kegelmantel schalenförmige Vertiefungen 34 zur Aufnahme der rohrförmigen Körper 5 auf. Die Saugtrommel 6 dreht sich um ihre Kegelachse 26, welche derart relativ zur Achse des Dorns 4 angeordnet ist, dass ein Oberflächenabschnitt der Saugtrommel 6 parallel zur Bewegungsachse des Dorns 4 verläuft. Angetrieben wird die Saugtrommel über einen Antriebsriemen 27 von einer nicht dargestellten Antriebsvorrichtung. Im Innern der Saugtrommel 6 wird über eine Vakuumleitung 28 ein Vakuum erzeugt, so dass die rohrförmigen Körper 5 in jeder Position in den schalenförmigen Vertiefungen der Saugtrommel gehalten werden können. Sowohl zum Laden als auch zum Entladen kann in gleicher Weise eine Saugtrommel 6 eingesetzt werden, welche die rohrförmigen Körper 5 beim Laden und Entladen verschwenkt. Für die Zufuhr bzw. Abfuhr der rohrförmigen Körper werden an sich bekannte Transportbänder eingesetzt, welche über den Saugtrommeln 6 angeordnet sind.

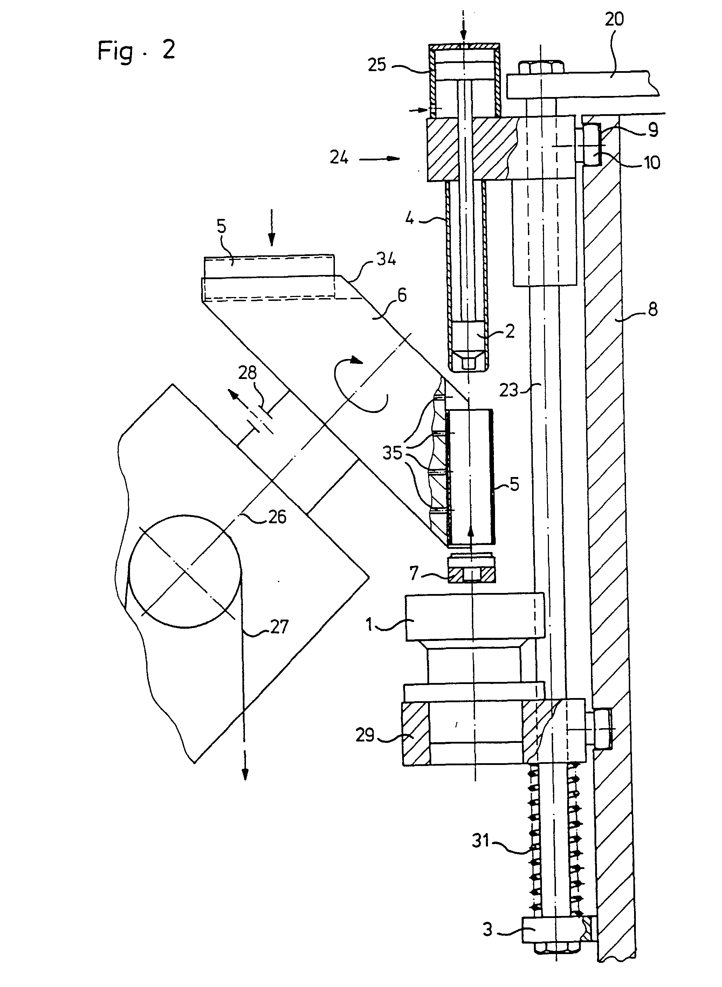

Wie insbesondere in Figur 2 dargestellt, gelangt ein rohrförmiger Körper von einem nicht näher dargestellten Transportband auf eine Saugtrommel 6 und wird dort über Oeffnungen 35 in der Saugtrommel durch das Vakuum festgehalten. Die Saugtrommel dreht den rohrförmigen Körper 5, bis dieser gleichachsig unter dem Dorn 4 gehalten wird. In dieser Position wird ein Stössel 7 nach oben bewegt, der den rohrförmigen Körper 5 von der Oberfläche der Saugtrommel 6 auf den Dorn 4 aufschiebt. Der Stössel 7 kann beispielsweise über ein Exzenterrad oder aber hydraulisch oder pneumatisch aktiviert werden.

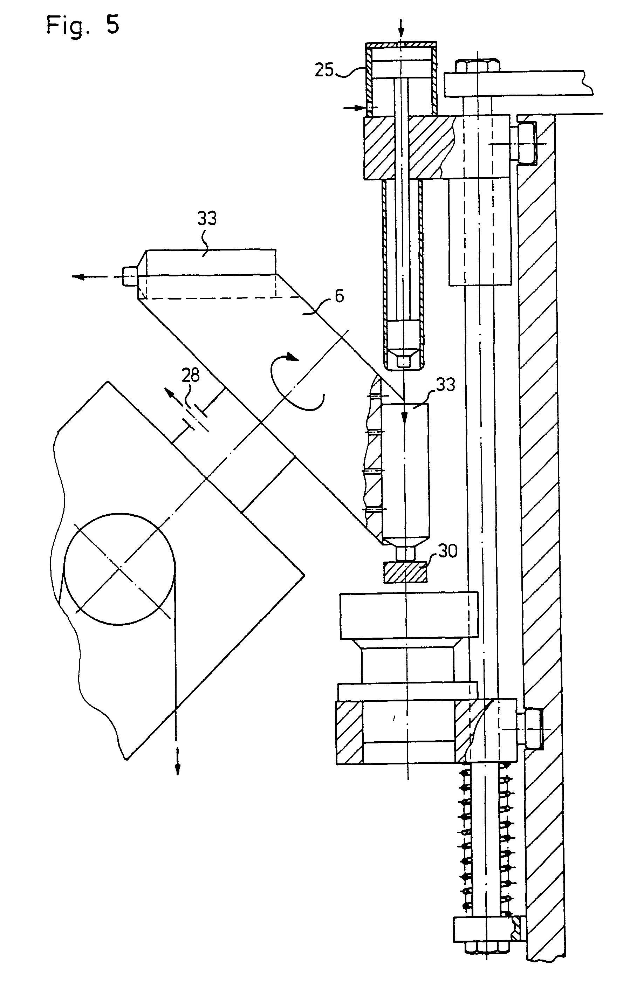

Wie in Figur 5 dargestellt, kann auch zum Entladen des Dorns 4 ein Entladehebel 30 eingesetzt werden, der auf die gleiche Weise aktiviert werden kann wie der Ladestössel 7. Der Entladehebel 30 hat die Aufgabe, den fertigen Tubenkörper 33 beim Abblasen vom Dorn 4 mittels Pressluft in einer kontrollierten Bewegung auf die Oberfläche der Saugtrommel 6 zu begleiten.

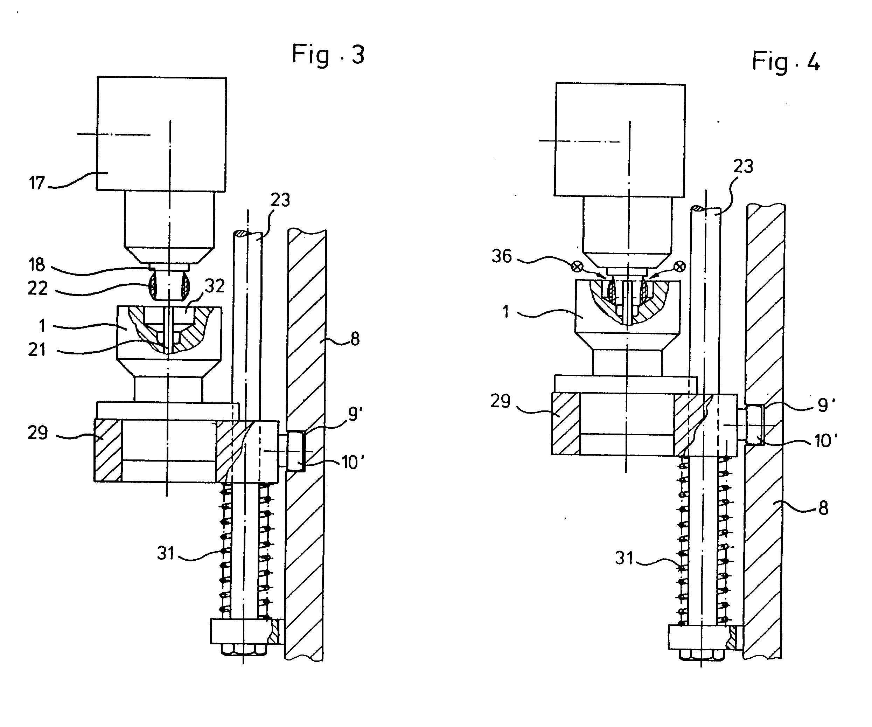

Die Figuren 3 und 4 zeigen die Position einer Matrize 1 unmittelbar vor und beim Erreichen der Ladestation. Die vereinfacht dargestellte Matrize weist einen Formhohlraum 32 auf, in den die Tubenschulter mit dem Aussengewinde gepresst wird. Zur Bildung der Tubenöffnung ragt ein Lochstempel 21 in den Formhohlraum. An der Füllstation wird aus einer an einem Füllkopf 17 angeordneten Austrittsöffnung 18 ein ringförmiger Rohling 22 aus plastifizierter Kunststoffmasse ausgepresst. In Figur 3 ist der im Querschnitt dargestellte Rohling 22 bereits aus der Austrittsöffnung 18 ausgetreten. Die Matrize 1 befindet sich noch in einer derart tiefen Position, dass sie im Abstand vom Rohling 22 angeordnet ist.

Wie Figur 4 zeigt, wird die Matrize 1 unter der Kraft der Spannfeder 31 an der Füllstation nach oben bewegt, so dass der Rohling 22 wenigstens teilweise die Wandung des Formhohlraumes 32 berührt. Der Lochstempel 21 dringt dabei ins Innere des ringförmigen Rohlings, so dass ein schräges Herabfallen des Rohlings praktisch ausgeschlossen ist. Gleichzeitig wird mittels einer symbolisch dargestellten Wärmequelle 36 der Kunststoffrohling, welcher mittlerweile vom Materialstrom des Extruders getrennt ist, von der Austrittsöffnung 18 abgelöst. Es erfolgt dabei ein eigentliches Abschmelzen des Rohlings, wobei gleichzeitig eine Erwärmung der Rohlingoberfläche und des Formhohlraums 32 bewirkt wird. Die vorzugsweise ringförmig angeordnete Wärmequelle 36 kann eine reine Strahlungsquelle sein, oder sie kann auch ein erhitztes gasförmiges Medium ausstossen.

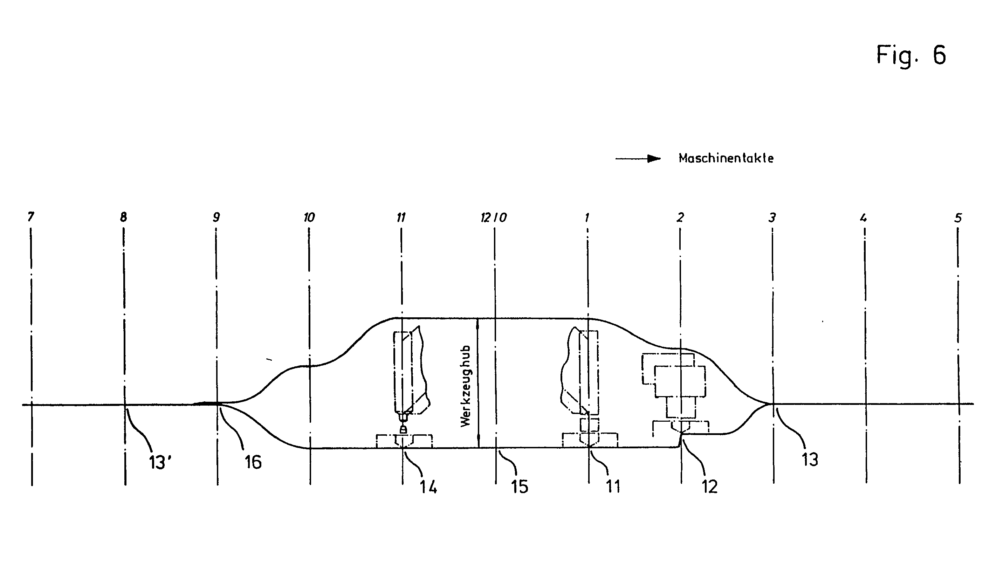

Die Arbeitsweise der Vorrichtung wird anschliessend anhand der Figuren 1 und 6 erläutert. Zuerst wird an der Ladestation 11 wie bereits beschrieben mit Hilfe der Saugtrommel 6 ein rohrförmiger Körper 5 unter den Dorn 4 gehalten. Wie insbesondere aus dem Diagramm in Figur 6 ersichtlich ist, ist der Dorn 4 an der Ladestation 11 in seine obere Endlage bzw. die Matrize 1 in ihre untere Endlage gefahren. Der rohrförmige Körper 5 wird mit Hilfe des Stössels 7 von der Oberfläche der Saugtrommel 6 auf den Dorn 4 aufgeschoben. Anschliessend dreht sich der Drehkörper 3 um einen Takt, so dass die Füllstation 12 erreicht wird. Der Verlauf der Hubkurve für die Matrize zeigt im Diagramm deutlich, wie die Matrize unmittelbar vor dem endgültigen Erreichen der Füllposition steil nach oben bewegt wird. Bei der Füllstation 12 ist ein Extruder 19 angeordnet, dessen Füllkopf 17 fest unmittelbar über der Oberkante der Matrizen angeordnet ist. Ueber den Füllkopf 17 gelangt vom Extruder 19 plastifizierte Kunststoffmasse in die Matrize, wie dies in den Figuren 3 und 4 dargestellt ist. Das Diagramm zeigt auch, dass sich der geladene Dorn mit dem Stempel zwischen der Ladestation 11 und der Füllstation 12 bereits abzusenken beginnt. Die Absenkung erfolgt gerade so weit, dass der geladene Dorn mit seiner Unterkante nicht den Füllkopf 17 berührt.

Nach dem Füllen der Matrize 1 bewegt sich der Drehkörper 3 im dritten Maschinentakt zur ersten Kühl- und Pressstation 13. Auf dem Weg von der Füllstation 12 zur ersten Kühl- und Pressstation 13 senkt sich der Stempel weiter nach unten und erreicht beim dritten Maschinentakt die tiefste Position. Die Matrize 1 führt zuerst noch eine etwa horizontale Bewegung aus, bis sie aus dem Bereich des Füllkopfs 17 weggefahren ist. Dann bewegt sich auch die Matrize 1 nochmals nach oben, bis sie bei der ersten Kühl- und Pressstation 13 die höchste Position erreicht. Bei der Kühl- und Pressstation 13 schliessen sich die beiden Werkzeugteile und der Druckmittelzylinder 25 wird aktiviert, um die Presskraft aufzubringen. Der Stempel 2 wird dabei in den Formhohlraum 32 gepresst, so dass die Tubenschulter geformt wird. Gleichzeitig verbindet sich der rohrförmige Körper 5 mit der Kunststoffmasse des Schulterstücks.

Vom dritten bis zum achten Maschinentakt, der in Figur 1 als letzte Kühl- und Pressstation 13' bezeichnet ist, bleibt das Werkzeug geschlossen. In dieser Zeit kühlt der Formkörper ab, der nun einstückig mit dem rohrförmigen Körper verbunden ist. Der rohrförmige Körper besteht aus einem Kunststoffmaterial, welches ähnliche Eigenschaften hat wie das Material des Formkörpers. Der rohrförmige Körper kann jedoch auch aus einem Laminat gefertigt sein. Es ist sogar denkbar, dass der rohrförmige Körper ganz aus Metall oder aus einem anderen nicht plastifizierbaren Material gefertigt ist und dass die Verbindung mit dem Formkörper in der Matrize einzig durch das Einpressen von Rückhalteelementen wie z.B. Nocken, Widerhaken usw. hergestellt wird.

Nach dem Passieren der letzten Kühl- und Pressstation 13', d.h. im vorliegenden Ausführungsbeispiel nach einem Kühlen und Pressen von ca. 5½ Takten, wird der Dorn mit dem Stempel etwas zurückgezogen, um ein Abschrauben des Tubenkopfes zu ermöglichen. Beim Abschrauben wird die gesamte Tube nach oben geschoben, was bei ganz eingepresstem Stempel ersichtlicherweise nicht möglich wäre. Das Zurückziehen des Stempels ist in Figur 6 unmittelbar vor dem neunten Takt als leichtes Ansteigen der Kurve sichtbar. Der neunte Maschinentakt kann als Abschraubstation 16 bezeichnet werden, obwohl das Abschrauben schon beim Anfahren dieser Station beginnen kann. So ist es beispielsweise möglich, jeder einzelnen Matrize eine eigene Abschraubvorrichtung zuzuordnen. Alternativ kann aber das Abschrauben auch ausschliesslich an der Abschraubstation 16 erfolgen, indem dort die Matrizen in eine fest angeordnete Abschraubvorrichtung eingekuppelt werden.

Sobald das Gewinde am Tubenkopf entformt ist, beginnt sich der Stempel mit dem Dorn wiederum anzuheben, was in Figur 6 als Ansteigen der Kurve gegen den zehnten Maschinentakt sichtbar ist. Auch die Matrize 1 wird gegen die Kraft der Spannfeder 31 wiederum nach unten in ihre tiefste Position gepresst. Der Druckmittelzylinder 25 wird völlig entspannt oder kann in bestimmten Anwendungsfällen auch in umgekehrter Richtung mit einem Druckmittel beaufschlagt werden, so dass er das Anheben des Dorns mit dem Stempel unterstützt. Je nach den Gegebenheiten kann es zweckmässig sein, wenn das Hochfahren des Dorns über zwei Maschinentakte verteilt wird, damit die Steuerkurve auf der Trommel 8 nicht einen zu steilen Verlauf nimmt. Wie im Diagramm gemäss Figur 6 dargestellt ist, erreicht der Stempel erst beim elften Maschinentakt seine oberste Position, während beim zehnten Maschinentakt eine kurze Verweilzeit eingeschaltet wird. Dabei verläuft die Steuerkurve für die Steuerung des Dorns unmittelbar beim zehnten Maschinentakt horizontal, um beim Wiedereinsetzen der Drehbewegung nach dem zehnten Takt die zu überwindenden Reibungskräfte an der Steuerkurve zu reduzieren.

Beim elften Maschinentakt wird mit dem Erreichen der Entladestation 14 wiederum die oberste Position des Dorns 4 erreicht. Bei der Entladestation 14 ist wiederum eine konische Saugtrommel 6 angeordnet. Zum Entladen wird Druckluft ins Innere des rohrförmigen Dorns 4 geleitet. Dadurch wird der Tubenkörper 33 nach unten weggeblasen. Gleichzeitig stützt ein Entladehebel 30 die Unterseite der Tube ab und führt die Tube nach unten, bis sie über die gesamte Länge an der Oberfläche der konischen Saugtrommel aufliegt. Durch Drehen der konischen Saugtrommel wird der Tubenkörper wiederum in eine horizontale Lage verschwenkt und einem Transportband zum Abtransport zugeführt.

Beim dargestellten Ausführungsbeispiel ist zwischen der Entladestation 14 und der Ladestation 11 eine freie Station 15 angeordnet, die für beliebige Zwecke verwendet werden kann. So wäre es beispielsweise denkbar, an der freien Station 15 Gegenstände, welche in den Formkörper eingepresst werden sollen, in die Matrize einzulegen. Selbstverständlich ist das Verfahren und die Vorrichtung nicht auf die im Beispiel dargestellten 12 Maschinentakte begrenzt. Je nach Durchmesser des Drehkörpers 3 und nach allenfalls noch erforderlichen Bearbeitungsschritten können mehr Maschinentakte mit der entsprechenden Anzahl Formwerkzeuge gefahren werden. Die auf dem Dorn festgehaltenen Formkörper eignen sich besonders gut für weitere Bearbeitungsschritte und es wäre z.B. denkbar, dass auf dem Drehkörper an bestimmten Arbeitsstationen auch noch weitere Arbeitsschritte wie z.B. Bedrucken, Prägen, Polymerisieren usw. vorgenommen werden. Zum Oeffnen und Schliessen der beiden Werkzeugteile bzw. zum Laden und Entladen der Dorne könnte auch nur der Dorn mit dem Stempel oder nur die Matrize allein eine Hubbewegung ausführen.

**Patentansprüche**

1. Verfahren zum Herstellen eines Formkörpers aus Kunststoffmaterial und zum gleichzeitigen Verbinden des Formkörpers mit einem rohrförmigen Körper (5), wobei mehrere Matrizen (1) auf einem antreibbaren Drehkörper (3) am Umfangsbereich angeordnet sind und auf dem Drehkörper jeder Matrize ein Dorn (4) mit einem Stempel (2) zugeordnet ist, der gleichachsig mit der Matrize verläuft und wobei ein rohrförmiger Körper (5) in einer koaxial mit der Stempelachse verlaufenden Ladeposition auf einen Dorn (4) aufgeschoben wird und anschliessend ein plastifizierter Kunststoff zwischen Stempel und Matrize eingebracht wird und der Stempel mit dem Dorn in die Matrize gepresst wird, dadurch gekennzeichnet, dass der Drehkörper um eine vertikale Achse gedreht wird und die Ladeposition vertikal verläuft, dass der Dorn (4) mit dem Stempel (2) und/oder die Matrize (1) im Verlaufe einer Umdrehung des Drehkörpers eine Hubbewegung ausführen, welche mechanisch über eine stationäre Steuerkurve ausgeführt wird, und dass das Pressen des Formkörpers mit einem, jedem Stempel (2) zugeordneten Druckmittelzylinder (25) erfolgt, wobei der Pressdruck unabhängig von der Relativlage des Drehkörpers gesteuert wird.

2. Verfahren nach Anspruch 1, dadurch gekennzeichnet, dass wenigstens der mit dem Formkörper zu verbindende Bereich des auf den Dorn (4) aufgeschobenen rohrförmigen Körpers (5) und/oder der Formkörper-Rohling in der Matrize (1) vor dem Einpressen in die Matrize vorgewärmt wird.

3. Verfahren nach Anspruch 1 oder 2, dadurch gekennzeichnet, dass die rohrförmigen Körper (5) mittels einer drehbaren, kegelförmigen Saugtrommel (6) in die Ladeposition unter den Dorn (4) gebracht werden und mit einem Stössel (7) von der Oberfläche der Saugtrommel (6) auf den Dorn (4) gestossen werden.

4. Verfahren nach Anspruch 3, dadurch gekennzeichnet, dass die mit dem Formkörper verbundenen rohrförmigen Körper nach dem Pressvorgang vom Dorn (4) auf die Oberfläche einer drehbaren, kegelförmigen Saugtrommel (6) transferiert werden.

5. Verfahren nach einem der Ansprüche 1 bis 4, dadurch gekennzeichnet, dass die Matrize (1) zur Aufnahme des Kunststoffrohlings (22) an einer Füllstation (12) gegen die Austrittsöffnung (18) für das Kunststoffmaterial gefahren wird.

6. Verfahren nach Anspruch 7, dadurch gekennzeichnet, dass der in der Matrize liegende und vom Materialstrom getrennte Kunststoffrohling (22) durch Wärmeeinwirkung von der geschlossenen Austrittsöffnung abgelöst wird.

7. Vorrichtung zum Herstellen eines Formkörpers aus Kunststoffmaterial und zum gleichzeitigen Verbinden des Formkörpers mit einem rohrförmigen Körper (5), wobei mehrere Matrizen (1) auf einem antreibbaren Drehkörper (3) am Umfangsbereich angeordnet sind und auf dem Drehkörper jeder Matrize (1) ein Dorn (4) mit einem Stempel (2) zugeordnet ist, der gleichachsig mit der Matrize verläuft, und wobei jeder Stempel (2) mit dem, einen rohrförmigen Körper (5) tragenden Dorn (4) in die ihm zugeordnete Matrize zum Pressen des Formkörpers pressbar ist, dadurch gekennzeichnet, dass der Drehkörper in vertikaler Lage um eine feststehende zylindrische Trommel (8) drehbar ist, dass die Dorne (4) mit dem Stempel (2) und/oder die Matrizen (1) zum Ausführen einer Hubbewegung mit einer Steuerkurve auf dem Mantel der Trommel in Wirkverbindung stehen, und dass jedem Stempel ein Druckmittelzylinder (25) zugeordnet ist, der unabhängig von der Relativlage des Drehkörpers (3) ansteuerbar ist.

8. Vorrichtung nach Anspruch 7, dadurch gekennzeichnet, dass an einer Ladestation und/oder an einer Entladestation eine drehbare, kegelförmige Saugtrommel (6) zum Zuführen, bzw. zum Abführen der rohrförmigen Körper derart im Drehbereich des Drehkörpers (3) angeordnet ist, dass ein Oberflächenabschnitt der Saugtrommel (6) parallel zur Hub- und Pressachse der Stempel (2) verläuft.

9. Vorrichtung nach Anspruch 7 oder 8, dadurch gekennzeichnet, dass die Matrizen (1) an der Steuerkurve zum Laden der Dorne gegen die Kraft einer Feder (31) absenkbar sind, und dass die Steuerkurve im Bereich der Ladestation (11) derart steil verläuft, dass die Matrize (1) durch die Federkraft in annähernd senkrechter Hubbewegung gegen die Austrittsöffnung (18) für das Kunststoffmaterial bewegt wird.

**Revendications**

1. Procédé de fabrication d'une pièce moulée en matière plastique et de liaison simultanée de la pièce moulée avec une pièce tubulaire (5), procédé selon lequel plusieurs matrices (1) sont disposées sur la zone périphérique d'un organe tournant (3) qui peut être entraîné en rotation, tandis que, sur l'organe tournant est associé, à chaque matrice un mandrin (4) avec un poinçon (2) qui est aligné coaxialement avec la matrice et selon lequel on emmanche une pièce tubulaire (5) sur un mandrin (4), dans une position de chargement coaxiale avec l'axe du poinçon, puis on introduit une matière plastique plastifiée entre le poinçon et la matrice et le poinçon est pressé dans la matrice par le mandrin, caractérisé par le fait que l'organe tournant est entraîné en rotation autour d'un axe vertical et que la position de chargement est orientée verticalement, par le fait que le mandrin (4) avec le poinçon (2) et/ou la matrice (1) exécutent, au cours d'une rotation de l'organe tournant, un mouvement de monte et baisse qui s'effectue mécaniquement par l'intermédiaire d'une came de commande fixe, et par le fait que le pressage de la pièce moulée se fait au moyen d'un vérin (25) associé à chaque poinçon (2), la pression de pressage étant commandée indépendamment de la position relative de l'organe tournant.

2. Procédé selon la revendication 1, caractérisé par le fait qu'avant pressage dans la matrice (1), on préchauffe au moins la zone à relier à la pièce moulée, de la pièce tubulaire (5) emmanchée sur le mandrin (4), et/ou l'ébauche de la pièce moulée, qui se trouve dans cette matrice.

3. Procédé selon la revendication 1 ou 2, caractérisé par le fait que les pièces tubulaires (5) sont amenées dans la position de chargement, sous le mandrin (4), au moyen d'un tambour aspirant tournant, de forme conique (6), et sont poussées sur le mandrin (4) au moyen d'un poussoir (7), depuis la surface du tambour aspirant (6).

4. Procédé selon la revendication 3, caractérisé par le fait qu'après le processus de pressage, les pièces tubulaires, reliées à la pièce moulée, sont transférées, du mandrin (4) sur la surface d'un tambour aspirant tournant en forme de cône (6).

5. Procédé selon l'une des revendications 1 à 4, caractérisé par le fait que, pour que la matrice (1) reçoive l'ébauche en matière plastique (22) à une station de remplissage (12), on amène cette matrice contre l'ouverture de sortie (18) de la matière plastique.

6. Procédé selon la revendication 7, caractérisé par le fait que l'ébauche en matière plastique (22), placée dans la matrice et séparée du flux de matière, est détachée de l'ouverture de sortie fermée, par effet thermique.

7. Installation de fabrication d'une pièce moulée en matière plastique et de liaison simultanée de la pièce moulée avec une pièce tubulaire (5), dans laquelle plusieurs matrices (1) sont disposées sur la zone périphérique d'un organe tournant (3) qui peut être entraîné en rotation, et à chaque matrice est associé, sur l'organe tournant, un mandrin (4) avec un poinçon (2) qui est aligné coaxialement avec la matrice, et dans laquelle chaque poinçon (2), avec le mandrin (4) qui porte une pièce tubulaire (5), peut être poussé dans la matrice qui lui est associée pour le pressage de la pièce moulée, caractérisée par le fait que l'organe tournant peut tourner en position verticale autour d'un tambour cylindrique fixe (8), par le fait que les mandrins (4) avec le poinçon (2) et/ou les matrices (1) sont en prise avec une came de commande, située sur la surface latérale du tambour, pour exécuter un mouvement de monte et baisse, et par le fait qu'à chaque poinçon est associé un vérin (25) qui peut être commande indépendamment de la position relative de l'organe tournant (8).

8. Installation selon la revendication 7, caractérisée par le fait qu'à une station de chargement et/ou à une station de déchargement, un tambour aspirant tournant, en forme de cône (6), prevu pour amener ou évacuer la pièce tubulaire, est disposé dans la zone de rotation de l'organe tournant (3) de façon telle qu'une portion de surface du tambour aspirant (6) soit orientée parallèlement à l'axe du mouvement de monte et baisse et de pressage du poinçon (2).

9. Installation selon la revendication 7 ou 8, caractérisée par le fait que les matrices (1) peuvent descendre le long de la came de commande, à l'encontre de la force d'un ressort (31), pour le chargement des mandrins, et que, au voisinage de la station de chargement (11), la came de commande présente une pente telle que, sous l'action de la force du ressort, la matrice (1) se déplace, dans un mouvement de montée approximativement vertical, pour venir contre l'ouverture de sortie (18) de la matière plastique.

**Claims**

1. Method for manufacturing a moulding from plastics material and for the simultaneous joining of the moulding to a tubular body (5), wherein a plurality of bottom dies (1) are mounted on the circumferential region of a drivable rotary body (3), and on the rotary body of each bottom die a mandrel (4) is associated with an upper die (2) and extends coaxially with the bottom die, and wherein a tubular body (5) is mounted on a mandrel (4) in a loading position extending coaxially with the upper die axis, and then a plasticised plastics material is introduced between the upper die and the bottom die, and the upper die with the mandrel is pressed into the bottom die, characterised in that the rotary body is rotated about a vertical axis and the loading position extends vertically, in that the mandrel (4) with the upper die (2) and/or the bottom die (1) perform one stroke movement in the course of a rotation of the rotary body, which is effected mechanically via a stationary cam, and in that the pressing of the moulding is effected with a pressure medium cylinder (25) associated with each upper die (2), the pressure being controlled independently of the relative position of the rotary body.

2. Method according to claim 1, characterised in that at least the region of the tubular body (5) which is mounted on the mandrel (4) and which is to be joined to the moulding and/or the moulding blank are pre-heated in the bottom die (1) before pressing into the bottom die takes place.

3. Method according to claim 1 or 2, characterised in that the tubular bodies (5) are brought into the loading position under the mandrel (4) by means of a rotary, conical suction drum (6) and are pushed on to the mandrel (4) with a ram (7) from the surface of the suction drum (6).

4. Method according to claim 3, characterised in that the tubular bodies connected to the moulding are transferred to the surface of a rotary, conical suction drum (6) by the mandrel (4) after the pressing process.

5. Method according to one of claims 1 to 4, characterised in that the bottom die (1) is moved to a filling station (12) against the discharge aperture (18) for the plastics material in order to receive the plastics blank (22).

6. Method according to claim 7, characterised in that the plastics blank (22) lying in the bottom die and separated from the material stream is detached from the discharge aperture by the effect of heat.

7. Apparatus for manufacturing a moulding from plastics material and for the simultaneous joining of the moulding to a tubular body (5), wherein a plurality of bottom dies (1) are mounted on the circumferential region of a drivable rotary body (3), and on the rotary body of each bottom die (1) a mandrel (4) is associated with an upper die (2) and extends coaxially with the bottom die, and wherein each upper die (2) is pressable with the mandrel (4) carrying a tubular body (5) into the associated bottom die in order to press the moulding, characterised in that the rotary body is rotatable in the vertical position about a fixed cylindrical drum (8), in that the mandrels (4) with the upper die (2) and/or the bottom dies (1) for carrying out a stroke movement are in operating connection with a control cam on the casing of the drum, and in that a pressure medium cylinder (25) is associated with each upper die, and is drivable independently of the relative position of the rotary body (3).

8. Apparatus according to claim 7, characterised in that a rotary, conical suction drum (6) for supplying or discharging the tubular bodies is so mounted in the rotary region of the rotary body (3) at a loading station and/or at an unloading station that a section of the surface of the suction drum (6) extends parallel to the stroke and pressing axis of the upper die (2).

9. Apparatus according to claim 7 or 8, characterised in that the bottom dies (1) may be lowered on the control cam against the force of a spring (31) for loading the mandrels and in that the control cam extends obliquely in the region of the loading station (11) in such a manner that the bottom die (1) is moved by the spring force in an approximately vertical stroke movement towards the discharge aperture (18) for the plastics material.

Fig. 1

EP 0 175 642 B1

Fig · 2

Fig · 3

Fig · 4

Fig. 5

Fig. 6

Maschinentakte

Werkzeughub

EP 0 175 642 B1